(19) Europäisches Patentamt / European Patent Office / Office européen des brevets

(11) **EP 3 425 340 B1**

(12) **EUROPEAN PATENT SPECIFICATION**

(45) Date of publication and mention
of the grant of the patent:
**30.06.2021  Bulletin 2021/26**

(51) Int Cl.:
***G01C 21/34*** *(2006.01)*

(21) Application number: **17179447.2**

(22) Date of filing: **04.07.2017**

(54) **METHOD, DEVICE, COMPUTER PROGRAM AND COMPUTER PROGRAM PRODUCT FOR PARK SPOT ROUTING FOR A VEHICLE**

VERFAHREN, VORRICHTUNG, COMPUTERPROGRAMM UND COMPUTERPROGRAMMPRODUKT ZUR PARKPLATZLEITUNG FÜR EIN FAHRZEUG

PROCÉDÉ, DISPOSITIF, PROGRAMME INFORMATIQUE ET PRODUIT DE PROGRAMME INFORMATIQUE DESTINÉ À COLLECTER DES DONNÉES D'UN DISPOSITIF MOBILE DANS UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.01.2019  Bulletin 2019/02**

(73) Proprietor: **Bayerische Motoren Werke Aktiengesellschaft
80809 München (DE)**

(72) Inventors:
• **Hedderich, Mareike
80796 München (DE)**
• **Fastenrath, Dr. Ulrich
85399 Hallbergmoos (DE)**
• **Isaac, Gordon
80807 München (DE)**

(56) References cited:
**EP-A2- 2 075 538     US-A1- 2014 052 374**

EP 3 425 340 B1

**Description**

The invention relates to a method for park spot routing for a vehicle according to claim 1. The invention relates further to a device for park spot routing for a vehicle according to claim 4. The invention relates further to a computer program and computer program product for park spot routing for a vehicle according to claims 5 and 6.

Due to the increasing number of cars in the world and the use of private transportation, major cities encounter traffic problems every day, whereby drivers looking for a parking spot have a large impact on urban traffic.

EP 2 075 538 A2 relates to a navigation device which is configured such that, in a case where a user has set a destination and the user wants to park in an on-street parking zone, the navigation device searches for and finds an on-street parking zone that is located in the vicinity of the set destination. The navigation device computes a parking cost factor based on various types of information pertaining to the on-street parking zone that is found. Based on the computed parking cost factor, the navigation device modifies a link cost for a link on which the on-street parking zone is provided. The navigation device uses the modified link cost to search for a route to the destination.

US 2014/052374 A1 relates to a method and device for carrying out travel route planning for a vehicle, in which schedule data are transmitted to a calculation unit, which is coupled to a data memory, in which data relating to a path network for the vehicle and data relating to the geographic positions of energy supply facilities are stored. The calculation unit checks if a route sequence which connects the geographic positions of the destinations associated with the schedule data is calculable such that the destinations are reached at the associated time data of the schedule data, wherein the prognosticated residual energy amount in the energy store of the vehicle for travelling the route sequence is determined and taken into account, if no such route sequence is calculable using the calculation unit, the latter determines matched schedule data for which such a route sequence is calculable, and the matched schedule data are output.

The object of the invention is to contribute that a park spot can be reached in a very efficient manner.

This object is achieved by the features of the independent claims. Advantageous embodiments of the invention are given in the dependent claims.

The invention relates to a method for park spot routing for a vehicle. The invention further relates to a corresponding device wherein the device is constructed to execute the method for park spot routing.

In the method for park spot routing for a vehicle a start position of the vehicle for the park spot routing is provided. A destination position of the vehicle for the park spot routing is provided. Parking data are provided which comprise information about parking facilities. A park spot route is determined based on the start position, the destination position and the parking data, wherein the park spot route is determined by means of an adapted A* algorithm.

The information about parking facilities comprises, for example, static information about parking facilities, such as parking lots, parking segments, park & ride areas, underground garages etc. and dynamic information about parking facilities, such as on-street parking probabilities, occupancy etc. in a given area, also around the destination position.

The start position may correspond to an actual position of the vehicle measured by a sensor, as for example a GPS sensor. The destination position may correspond to a chosen destination, which a user entered into a navigation system.

The determined park spot route can then be used by a navigation system to guide a driver through streets with high parking probabilities, where the driver decides where to park their car. By using an adapted shortest route algorithm a very efficient route is determined so that a driver does not have to randomly search for a parking spot. Thus, a park spot can be reached in a very efficient manner.

The adapted shortest route algorithm is, according to the invention, an adapted A* algorithm.

According to the invention the parking data further comprise parking probabilities of the parking locations, the adapted shortest route algorithm is an adapted A* algorithm and a cost function of the adapted A* algorithm uses the parking probabilities.

By using the parking probabilities in the cost function of the adapted A* algorithm, the adapted A* algorithm is better adapted to the scenario of finding a parking spot. Thus, the probability that the driver actually finds a parking slot at the destination of the determined park spot route can be raised.

According to a further embodiment a travel time from a current node to a destination node is determined and the cost function of the adapted A* algorithm uses the travel time.

By using the travel time in the cost function of the adapted A* algorithm, the adapted A* algorithm is better adapted to the scenario of finding a parking spot in a short travel time. Thus, the actual travel time until the driver actually finds a parking slot at the destination of the determined park spot route can be lowered.

According to the invention a maximal distance is provided which represents a maximal distance that a user is willing to walk from a parking spot to the destination position and the cost function of the adapted A* algorithm further uses the maximal distance.

By using the maximal distance in the cost function of the adapted A* algorithm, the adapted A* algorithm is better adapted to the scenario of finding a parking spot in a short distance to the actual destination. Thus, the walking time from the parking slot to the destination can be lowered.

According to a further embodiment an Euclidian distance between a current node and a destination node is determined in the adapted A* algorithm and a heuristic of the adapted A* algorithm uses the Euclidian distance.

It is important that the heuristic never overestimates the costs, therefore e.g. the Euclidean distance from a current vertex to the destination can be a valid heuristic, since the direct way is always shorter than a way with curves.

According to a further aspect the invention is distinguished by a computer program for park spot routing for a vehicle, wherein the computer program is constructed to execute the method for park spot routing or an embodiment of the method by its execution on a data processing device.

According to a further aspect the invention is distinguished by a computer program product comprising executable program code, wherein the program code executes the method for park spot routing or an embodiment of the method by execution on a data processing device.

The computer program product may comprise a medium which is readable by the data processing device and on which the program code is saved.

Exemplary embodiments of the invention are explained in the following with the aid of a schematic drawing.

This is as follows:

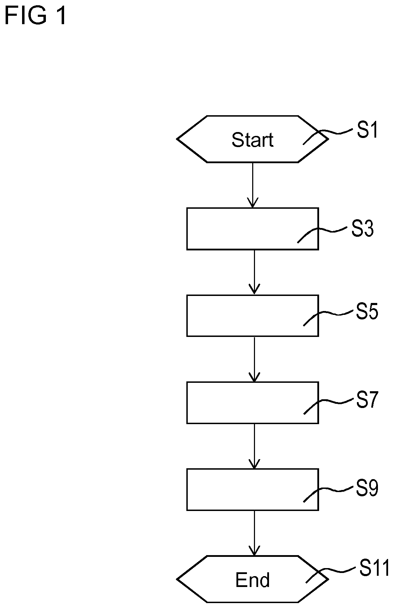

Figure 1 a flowchart of a program for park spot routing.

Figure 1 shows a flowchart of a program for park spot routing. The program can be executed by a device. The device may comprise a processing unit, a program and/or data memory and one or more communication interfaces.

In a step S1 the program is started and, for example, variables are initialized.

In a step S3 a start position of the vehicle is provided for the park spot routing.

In a step S5 a destination position of the vehicle is provided for the park spot routing.

In a step S7 parking data are provided which comprise static information about parking facilities, such as parking lots, parking segments, park & ride areas, underground garages etc. and dynamic information about parking facilities, such as on-street parking probabilities, occupancy etc. in a given area, also around the destination position.

In a step S9 a park spot route is determined based on the start position, the destination position and the parking data, wherein the park spot route is determined by means of an adapted shortest route algorithm.

In a step S11 the program is stopped and can be started again in the step S1.

In the following an example of a used adapted A* algorithm is presented, which is used as the adapted shortest route algorithm.

A road network may be modelled as a directed graph $G = (V,E)$, where $V$ denotes a set of nodes (also called vertices) and $E \subseteq V \times V$, a set of directed edges. Nodes $v \in V$ correspond to crossings or dead ends and edges $e \in E$ to directed road segments in the road network connecting the nodes. Additionally, $c{:}E \to \mathbb{R}_0^+$ is the cost function that maps every edge $e_j$ to its respective costs $c(e_j)$. With every edge $e_j$ a travel time $t(e_j)$ in seconds and a parking probability $p(e_j)$ is associated. The travel time is calculated by the length of the edge divided by the speed limit on that edge. Edges are directed and a two-way street has two edges with opposite directions. Thus, there are no multiple edges with the same direction. Therefore, the road network is a simple graph. In addition, the graph may be strongly connected, that means that a directed path can be found linking any pair of vertices.

A route in a graph is a finite sequence of nodes and edges R = $(v_0,e_1,v_1,e_2,...,e_k,v_k)$, not necessarily acyclic, wherein $e_j = (v_{j-1},v_j)$, for all $1 \leq j \leq k - 1$. The costs of the route are the accumulated costs of its edges

$$c(R) = \sum_{j=1}^{k} c(e_j).$$

For every node in the graph the Euclidean distance to the destination node can be calculated, since the coordinates of the nodes are given. The Euclidean distance for two points $x$ and $y$ with Cartesian coordinates $x = (x_1,x_2)$ and $y = (y_1,y_2)$ is defined as:

$$d(x,y) = d(y,x) = \sqrt{(y_1 - x_1)^2 + (y_2 - x_2)^2}. \qquad (1)$$

The adapted A* algorithm may use a street network modelled as a graph, as defined above. The search process of the adapted A* algorithm starts at node $v_0$, which corresponds to the starting position and ends at a destination node $v_k$.

The adapted A* algorithm is able to find a shortest path by means of an evaluation function $f(x) = g(x) + h(x)$ that evaluates the vertex $x$ currently under exploration, where g(x) defines the costs to get from the start vertex to the current vertex and $h(x)$ is a heuristic estimation of the costs from the current vertex to the destination vertex.

It is important that the heuristic never overestimates the costs, therefore e.g. the Euclidean distance from the current vertex to the destination can be a valid heuristic, since the direct way is always shorter than a way with curves.

The vertex which has the smallest $f$ value is explored further. If a cheaper path to a node $y$ is found, $g(y)$ has to be updated. Therefore, a tentative function $g_{tent}(y) = g(x) + c(x,y)$ is introduced. Assuming that $y$ is the successor node of $x$, then consequently $g(x)$ denotes the costs from the start node to the successor node $x$ and $c(x,y)$ is named the cost function that describes the costs to travel from node $x$ to node $y$. If $g_{tent}(y)$ is smaller than $g(y)$, $g(y)$ is updated to the value of $g_{tent}(y)$. To be able to track back the final path, the predecessors of the explored nodes are saved.

To be able to apply the adapted A* algorithm to the park spot searching problem, it is advantageous to adapt the cost function.

In the adapted A* algorithm a shortest path is the goal, therefore the cost function takes the travel times on the road segments into account. However, since the aim is a park spot route, the cost function may also incorporate parking probabilities and walking distances as well.

The challenges in combining travel times, parking probabilities and walking distances are the following. Travel time, walking distance and parking probability have different measuring units. The three variables live in different intervals, namely the travel time and walking distance in the interval $[0,\infty]$ and the parking probability in $[0,1]$.

Thus, in the following, an exemplary cost function, which overcomes the abovementioned challenges is developed. This is one example how the travel time, walking distance and parking probability can be integrated in one cost function in a very effective manner.

Part one of the cost function takes the travel time on the road links into account. Only the travel time is used during the calculation if $b$ has not been reached yet. After hitting the boundary, the cost function also considers parking probability and walking distance.

The second part involves the parking probabilities. Since it is advantageous if the probabilities do not affect the route until the boundary, a quality function may be used to control the influence of the parking probabilities during the calculation.

The impact of the parking probabilities is zero if the distance of the current node to the destination node exceeds the boundary $b$ and increases as the distance becomes smaller. The closer the node is to the destination, the more influence the parking probability in the function has. This function is multiplied with a function for the parking probabilities. In the adapted A* algorithm smaller values are better, since it means lower costs. Hence, the complementary probability is used in the cost function. The result of the two multiplied functions is in the interval $[0,1]$. To lift up the second part into one interval with the travel times, it is multiplied by the travel time. This solves the second challenge.

The third part represents the walking distance from the current node to the destination node, measured as Euclidean distance. A quality function may be used again, having the Euclidean distance as input. It is zero if the distance to the destination node exceeds the boundary and increases as the distance to the destination becomes smaller. Consequently, the walking distance affects the route after the boundary b. The values of the function of the third part are mapped into an interval between zero and one without dimensional units. Therefore, the third part is also multiplied by the travel time, to lift it up into the same interval.

The second and third part of the cost function are dimensionless, however, since they are multiplied by the travel time, the whole cost functions has the measurement in seconds, what solves the first challenge.

In conclusion, the following cost function is developed:

$$C(e_{j+1}) = t(e_{j+1}) \left[ 1 + \alpha \sqrt{-\frac{1}{b}\left(d(v_j, v_k) - b\right)} \cdot \frac{e^{s(1-p(e_{j+1}))} - 1}{e^s - 1} \right], \quad (2)$$

where $t(e_{j+1})$ is the travel time in seconds on road segment $e_{j+1}$, $b$ is the maximal distance in meters that the user is willing to walk from the parking spot to the destination (a value chosen by a user), $d(v_j, v_k)$ the distance in meters from the current node $v_j$ to the destination node $v_k$, $p(e_{j+1})$ is the parking probability on edge $e_{j+1}$, $s$ a parameter and $\alpha$ is a weight.

Furthermore, the heuristic of the adapted A* algorithm may be adapted to

$$h(v_j) = \frac{d(v_j, v_k)}{130/3.6}. \quad (3)$$

This is equivalent to the travel time on a linear connection between the current node and the destination node with a speed limit of 130 km/h, which is the recommended speed on German highways. The value of 130 km/h is advantageous to make sure that the heuristic does not overestimate the costs even on those parts of the route where the highway is chosen. However, in other regions with other speed limits other values may be advantageous.

The above described adapted A* algorithm can be summarized in the following pseudocode:

```
1: openlist = {start}
2: closedlost = {}
3: while openlist not empty do
4: currentnode = min(f)
5:    remove currentnode from openlist
6:    if currentnode = goal then
7:       return the route
8:    add currentnode to closedloost
9:    for each successor of currentnode do
10:       if successor not on closedlost then
11:          tentative_g = g(currentnode) + c(currentnode, successor)
12:          if successor is not on openlist and tentative_g ≤ g(successor) then
13:             g(successor) = tentative_g
14:             predecessor(successor) = currentnode
15:             f(successor) = g(successor) + h(successor)
16:             if successor is on openlist then
17:                 update f(successor) value of successor in openlist
18:             else
19:                 add successor to openlist with value f(successor)
```

By means of the above described algorithm a very efficient route is determined so that a driver does not have to randomly search for a park spot. Thus, a park spot can be reached in a very efficient manner.

**Claims**

1. Method for park spot routing for a vehicle comprising

   - providing (S3) a start position of the vehicle for the park spot routing,
   - providing (S5) a destination position of the vehicle for the park spot routing,
   - providing (S7) parking data which comprise information about parking facilities and parking probabilities of said parking facilities,
   - determining (S9) a park spot route based on the start position, the destination position and the parking data, wherein the park spot route is determined by means of an adapted A* algorithm,

   **characterized in that:**
   a cost function of the adapted A* algorithm considers the parking probabilities on a road segment and a walking distance from said road segment to the destination position, when said walking distance does not exceed a maximal distance which is chosen by a user and represents a maximal distance that the user is willing to walk from a parking spot to the destination position.

2. Method according to claim 1, wherein in the adapted A* algorithm

   - a travel time from a current node to a destination node is determined and
   - the cost function of the adapted A* algorithm uses the travel time.

3. Method according to anyone of the claims 1 to 2, wherein in the adapted A* algorithm

   - an Euclidian distance between a current node and a destination node is determined and
   - a heuristic of the adapted A* algorithm uses the Euclidian distance.

4. Device for park spot routing for a vehicle, wherein the device is constructed to execute the method according to anyone of the claims 1 to 3.

**5.** Computer program for park spot routing for a vehicle, wherein the computer program is constructed to execute the method according to anyone of the claims 1 to 3 by its execution on a data processing device.

**6.** Computer program product comprising executable program code, wherein the program code executes the method according to anyone of the claims 1 to 3 by execution on a data processing device.

**Patentansprüche**

**1.** Verfahren zur Parkplatzleitung für ein Fahrzeug, umfassend:

Bereitstellen (S3) einer Startposition des Fahrzeugs für die Parkplatzleitung,
bereitstellen (S5) einer Zielposition des Fahrzeugs für die Parkplatzleitung,
Bereitstellen (S7) von Parkdaten, die Informationen über Parkeinrichtungen und Parkmöglichkeiten der Parkeinrichtungen umfassen,
Bestimmen (S9) einer Parkplatzroute basierend auf der Startposition, der Zielposition und den Parkdaten, wobei die Parkplatzroute mittels eines angepassten A*-Algorithmus bestimmt wird,
**dadurch gekennzeichnet, dass:**
eine Kostenfunktion des angepassten A*-Algorithmus die Parkmöglichkeiten auf einem Straßensegment und eine Laufdistanz vom Straßensegment zu der Zielposition in Betracht zieht, wenn die Laufdistanz eine maximale Distanz nicht überschreitet, die durch einen Benutzer gewählt wird und eine maximale Distanz repräsentiert, die der Benutzer willens ist, von einem Parkplatz zu der Zielposition zu laufen.

**2.** Verfahren nach Anspruch 1, wobei beim angepassten A*-Algorithmus:

eine Fahrzeit von einem aktuellen Knoten zu einem Zielknoten bestimmt wird, und
die Kostenfunktion des angepassten A*-Algorithmus die Fahrzeit verwendet.

**3.** Verfahren nach einem der Ansprüche 1 bis 2, wobei beim angepassten A*-Algorithmus:

ein euklidischer Abstand zwischen einem aktuellen Knoten und einem Zielknoten bestimmt wird, und
eine Heuristik des angepassten A*-Algorithmus den euklidischen Abstand verwendet.

**4.** Vorrichtung zur Parkplatzleitung für ein Fahrzeug, wobei die Vorrichtung eingerichtet ist, das Verfahren nach einem der Ansprüche 1 bis 3 auszuführen.

**5.** Computerprogramm zur Parkplatzleitung für ein Fahrzeug, wobei das Computerprogramm eingerichtet ist, das Verfahren nach einem der Ansprüche 1 bis 3 durch seine Ausführung auf einer Datenverarbeitungsvorrichtung auszuführen.

**6.** Computerprogrammprodukt, das ausführbaren Programmcode umfasst, wobei der Programmcode das Verfahren nach einem der Ansprüche 1 bis 3 durch Ausführung auf einer Datenverarbeitungsvorrichtung ausführt.

**Revendications**

**1.** Procédé de routage de point de stationnement pour un véhicule comprenant :

- la fourniture (S3) d'une position de départ du véhicule pour le routage de point de stationnement,
- la fourniture (S5) d'une position de destination du véhicule pour le routage de point de stationnement,
- la fourniture (S7) de données de stationnement qui comprennent des informations concernant des installations de stationnement et des probabilités de stationnement desdites installations de stationnement,
- la détermination (S9) d'une route de point de stationnement basée sur la position de départ, la position de destination et les données de stationnement, dans lequel la route de point de stationnement est déterminée au moyen d'un algorithme adapté A*,

**caractérisé en ce que** :
une fonction de coût de l'algorithme adapté A* considère les probabilités de stationnement sur un segment de route et une distance de marche à partir dudit segment de route à la position de destination, lorsque ladite distance de marche ne dépasse pas une distance maximale qui est choisie par un utilisateur et représente une distance maximale que l'utilisateur souhaite marcher à partir d'un point de stationnement à la position de destination.

2. Procédé selon la revendication 1, dans lequel dans l'algorithme adapté A*

   - on détermine un temps de déplacement à partir d'un nœud actuel à un nœud de destination et
   - la fonction de coût de l'algorithme adapté A* utilise le temps de déplacement.

3. Procédé selon l'une quelconque des revendications 1 à 2, dans lequel dans l'algorithme adapté A*

   - on détermine une distance euclidienne entre un nœud actuel et un nœud de destination et
   - une heuristique de l'algorithme adapté A* utilise la distance euclidienne.

4. Dispositif de routage de point de stationnement pour un véhicule, dans lequel le dispositif est élaboré pour mettre en œuvre le procédé selon l'une quelconque des revendications 1 à 3.

5. Programme informatique de routage de point de stationnement pour un véhicule, dans lequel le programme informatique est élaboré pour exécuter le procédé selon l'une quelconque des revendications 1 à 3 par son exécution sur un dispositif de traitement de données.

6. Produit de programme informatique comprenant un code de programme exécutable, dans lequel le code de programme exécute le procédé selon l'une quelconque des revendications 1 à 3 par une exécution sur un dispositif de traitement de données.

FIG 1

**EP 3 425 340 B1**

**REFERENCES CITED IN THE DESCRIPTION**

**Patent documents cited in the description**

- EP 2075538 A2
- US 2014052374 A1